# EUROPEAN PATENT SPECIFICATION

(11) **EP 0 940 673 B1**
(45) Date of publication and mention of the grant of the patent: **08.04.2009**
(21) Application number: 99201929.9
(22) Date of filing: 20.06.1994
(51) Int. Cl.: G01N 27/12

(54) **Method using a semiconductor gas sensor.**
Verfahren unter Verwendung eines Halbleitergasensors
Procédé utilisant un capteur de gaz à semi-conducteur.

(30) Priority: 18.06.1993 GB 9312619; 23.10.1993 GB 9321908; 22.12.1993 GB 9326148; 19.02.1994 GB 9403211
(43) Date of publication of application: 08.09.1999
(62) Divisional of application: 94918449.3
(73) Proprietor: CITY TECHNOLOGY LIMITED, Portsmouth Hants PO6 1SZ (GB)
(72) Inventor: McGeehin, Peter, Compton, RG 0QU (GB); Moseley, Patrick Timothy, Chilton, Didcot 0X11 0RT (GB); Williams, David Edward, Abingdon 0X14 2EE (GB); Henshaw, Geoffrey Stephen, London SW12 9RU (GB); Dawson, Darryl Hirst, London E17 6HX (GB); Gellman, Laura Jane, Harrow HA1 4PA (GB)
(74) Representative: Skone James, Robert Edmund

(56) References cited:
- DE-A- 3 213 286
- GB-A- 2 149 122
- US-A- 4 007 435
- US-A- 4 457 161

## Description

This invention relates to resistive gas sensors; methods of making such sensors; sensor arrays comprising such sensors; and methods of using such sensors and arrays.

Such a sensor, as is well known, comprises, in general terms, a semiconducting sensing element such that its electrical resistance changes, in response to a change in the concentration of at least one gas or vapour (sometimes referred to as a "target gas") that is present, to a substantially greater extent than to other gases or vapours.

The sensor is thus selective in favour of the target gas and is accordingly used for detection, and, where required, measurement, of the target gas.

Such a sensor will be referred to as a sensor of the kind specified.

Semiconducting oxide materials, when used for gas sensors, provide devices which are inexpensive, light and robust. However, they suffer a reputation for unacceptable cross-sensitivity to different gases, particularly to water vapour, which is always present in the atmosphere at concentrations which can vary widely. Devices based on tin dioxide, such as are widely used, show strong effects of changes in relative humidity, both on the baseline resistance and on the sensitivity of the resistance change to the presence of gases such as carbon monoxide.

These devices also have a reputation for excessive baseline drift and show a long stabilisation time in the atmosphere after the temperature of the device has first been raised to its operating value. The present invention aims to provide a method using a sensor material which is more selective than those in current use, particularly in respect of the discrimination of changes in the concentration of the gas to be detected from the effects of varying relative humidity.

A second object of the invention is to provide a method using a sensor material with short stabilisation time and greatly reduced baseline drift in comparison with those devices that are currently in common use.

A third object of the present invention is to provide a method using a sensor material which offers improved selectivity and sensitivity for certain gases whose detection in the environment is of concern.

A fourth object is to provide a method using certain combinations of sensors utilising different materials which can then be used, in various ways well known in the art, to provide more reliable alarm indications for certain conditions that might be injurious to health and safety.

It has been suggested (in the paper by D. E. Williams and P. T. Moseley, J Materials Chemistry, 1 (1991) 809-814) that the behaviour of semiconducting oxide materials can be manipulated by manipulation of the crystallite size and surface area per unit mass of the material exposed to the gas, and of the concentration of electrically active donor species present in the lattice, so as to give changes characteristic either of n-type materials (resistance decreases in reducing gases and increases in oxidising gases); or of p-type materials (resistance increases in reducing gases and decreases in oxidising gases); or of mixed behaviour.

The same paper also suggested that, by a fortuitous combination of the concentration of electrically active donors and the surface area per unit mass, some selectivity to certain gases might be obtained.

In the light of these disclosures, it is possible to try substituting elements of different valency into some parent composition, and to try making variations in the preparation of materials so as to obtain different surface areas per unit mass, in an attempt to achieve a degree of selectivity. However, the above paper offers no prescription for the choice of suitable parent compositions, and implies that wide selectivity might require specific interaction of the target gas with the surface, as well as tuning of the composition and surface area. The paper therefore leads to a conclusion that the observation of a wide selectivity of response in a semiconducting oxide material would be rather surprising; and that, furthermore, it would be very surprising indeed to find a high degree of selectivity of response where no specific interaction with the surface were anticipated - for example, a high selectivity of response for hydrocarbons over carbon monoxide.

The above mentioned paper is silent on the question of discrimination of the effects of the desired target gas from the effects of variation in relative humidity. It will also be appreciated, especially from the study of the art of catalysis, that substitutions of different elements into a lattice can serve to vary the surface density and nature of the gas absorption sites present on the surface of the material. Such sites are often classified as acidic or basic, according to whether they can interact with gases such as ammonia on the one hand or hydrogen sulphide or carbon dioxide on the other. For example, it is often said that the substitution of chromium into a lattice serves to increase the acidity of the surface sites. However, it is by no means clear how such adsorption sites couple into the charge carriers present in the solid, so that a change in the adsorption of dissociation of a gas molecule on such a site could give rise to a change in the measured conductivity of the solid material.

US 4,197,089 describes a reducing gas sensor having a thin tungsten oxide film detector element with means to adjust the specificity of the film for the gas to be detected. If hydrogen sulphide is to be detected, a tungsten trixoide film is used. If ammonia is to be detected, a platinum catalyst is used in conjunction with the film. US 4,457,161 discloses a gas detection device and method involving an array of gas sensors, each having different gas selectivities. It is suggested that one of these sensors could be a WO₃ film in a platinum-catalysed form. Both sensing elements disclosed in these documents are relatively thin and their microstrutures are not considered in any detail. As a result, sensors of this sort tend to have poor stability and low gas sensitivity.

The present invention proposes a material for use in gas sensors, having improved selectivity of response to different gases. Specific examples are as follows.

WO₃, prepared in the form of a porous thick film, which is extremely and surprisingly sensitive to small concentrations of chlorine and nitrogen dioxide in air, giving extremely good discrimination against the effects of varying relative humidity, and against the effects of hydrocarbons and carbon monoxide which might also be present in the atmosphere.

The invention provides a method of detecting at least one target gas using a gas sensor as set forth in claim 1.

An embodiment of the invention will now be discussed, with reference where appropriate to known prior art. This description, for convenience, is divided into headed sections, in which the use of the sensing element material (referred to for short as "sensor material") for specific purposes is discussed.

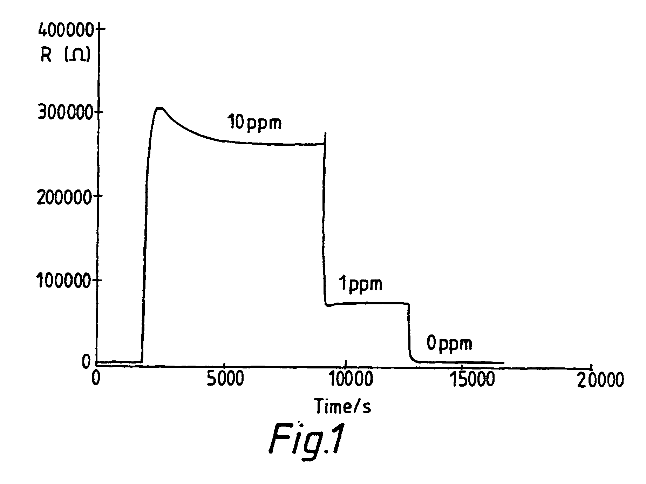

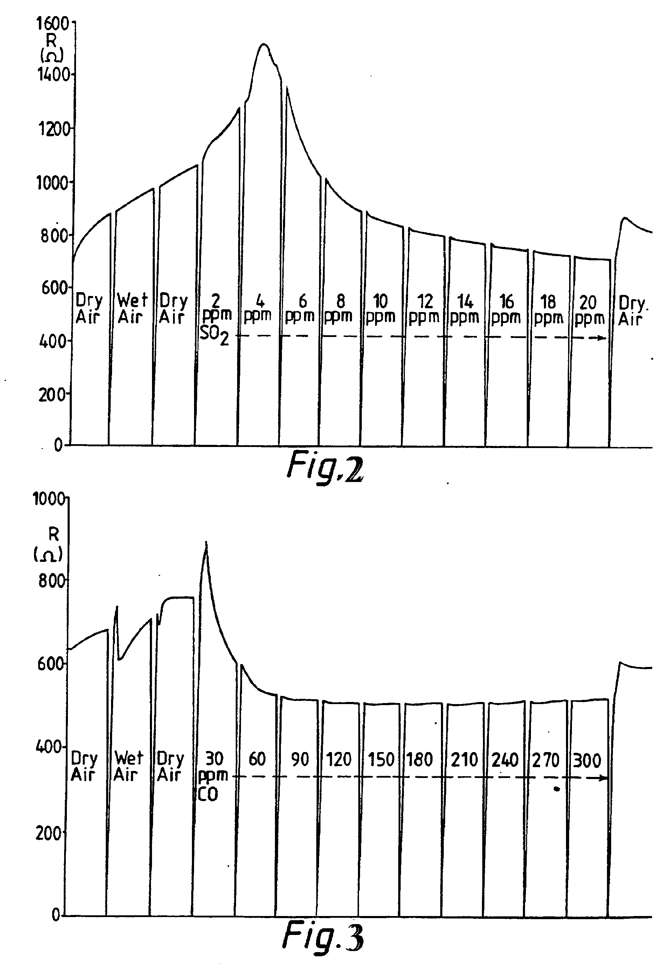

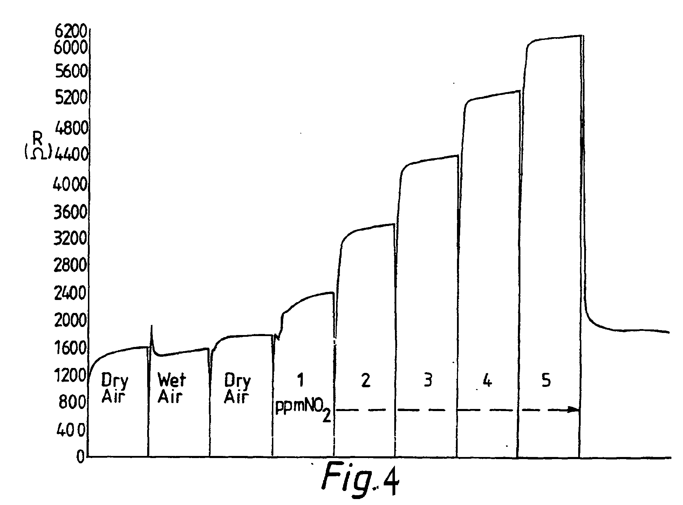

A non-limiting example will be given, and reference will be made to the accompanying drawings, in which:-
Figures 1 to 4 are response diagrams for a WO₃ sensor, showing variation in its resistance, in response to various different gases;

### Sensor for chlorine and nitrogen dioxide

Tungstic oxide (WO₃) is well known as a sensor material when deployed in the form of a thin film, typically at most a few hundred nanometres thick. This material has been extensively studied as a sensor for hydrogen sulphide, and has been deployed commercially for this purpose. Such sensors have a reputation for poor calibration stability, and to be difficult to manufacture reproducibly. There has been mention in the literature of the sensitivity of these devices to the presence of hydrocarbons and carbon monoxide.

Now, surprisingly, we have found that this material, applied as a thick film, having a thickness typically of the order of some 100 micrometres but within a range of perhaps 10 - 200 micrometres, by screen printing onto a ceramic substrate carrying the electrodes for measurement of the resistance and having a printed heater on the reverse side, forms an excellent sensor for chlorine and nitrogen dioxide. The resistance changes in such a sensor, in the presence of low concentrations of these gases (of the order of 0.5ppm in air), are very large. The effect of hydrocarbons, solvents, ammonia and sulphur dioxide is small in comparison with the effect of chlorine and nitrogen dioxide. The sensor is not degraded by these gases. The baseline resistance and calibration are stable over time.
Figure 1 shows the resistance of such a WO₃ sensor at 400°C to chlorine in three different concentrations (including zero) in air.
Figures 2 to 4 show the response of such WO₃ sensors to various concentrations of SO₂ at 400°C, CO at 500°C, and NO₂ at 500°C respectively. It can be seen that while the responses to SO₂ and CO at these temperatures are negligible, the sensor displays a strong response to both chlorine and NO₂.

### Sensor configuration with reference to the electrical interrogation of the gee sensitive material.

Figure 5 shows, purely diagrammatically, the conventional configuration of a semiconductor gas sensor, whereby the latter has four wires for electrical connection. Two of these, 10 and 11, are attached to a pair of electrodes 12 and 13, which are bridged by the gas sensing element 14, the resistance of which is to be measured. The other two wires 15 and 16 supply a resistance heating element 17, which is typically electrically insulated from the sensing element 14, for example by a layer of alumina 18 with the heating element 17 on one side and the sensing element 14 on the other.

When a sensor element material is used that has a resistance within a suitable range of values, however, it is possible to use fewer wires, with the advantage that heat loss by conduction is reduced. The sensor can then achieve its operating temperature with reduced power input.

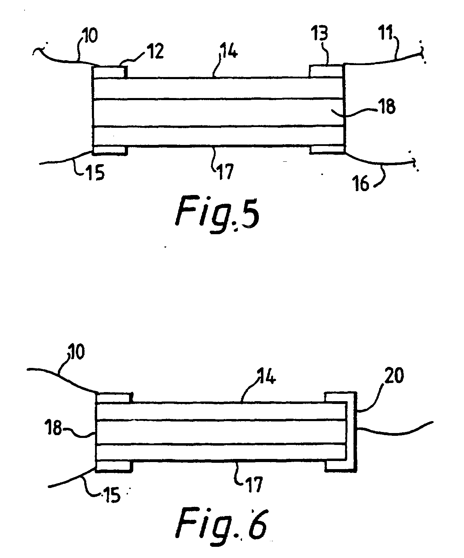

For example, when the resistance of the sensing material during operation remains high with respect to the resistance of the heating element, then it is possible for the sensing part and heating part to have one wire 20 in common, thus reducing the number of wires to three as seen in Figure 6.

Again, when the resistance of the sensing element material at the operating temperature is of similar magnitude to that of the heating element, it is possible to have the sensing element in contact with the heater, as a parallel resistor, i.e. omitting the layer 18. Gas sensing will then be achieved by measuring the combined resistance, through two wires only.

These alternative interrogation configurations can be applied, with advantage, to a sensor made with the material disclosed herein.

## Claims

1. A method of detecting at least one target gas using a gas sensor comprising a semiconducting sensing element (14), the electrical resistance of which changes in response to a change in the concentration of the at least one target gas to a greater extent than to other gases or vapours, whereby the sensing element (14) is selective in favour of the target gas, so as to detect the latter, wherein the sensing element comprises a porous WO₃ film, the thickness of which is in the inclusive range 10-200 micrometres, and the gas sensor further comprises a heating element (17) for heating the porous WO₃ film, the method comprising:
exposing the semiconducting sensing element (14) to an atmosphere;
heating the semiconducting sensing element (14) to an operating temperature; and
producing an electrical resistance signal representing the amount of target gas or gases present;
and **characterised in that** the target gas is chlorine.

2. A method according to claim 1, wherein the said thickness of the WO₃ film is 100 micrometres.

3. A method according to claim 1 or claim 2 wherein the porous WO₃ film, when heated, displays in response to the presence of 0.5 parts per million of chlorine in air a resistance substantially higher than in response to SO₂ or CO.

4. A method according to claim 1 wherein the electrical resistance signal is produced using electrical connecting means connected variously to the sensing element and heating element, said connecting means comprising first connection means (10, 15) connected to the sensing element, and a common electrical connection (20) connected to both of said elements (14, 17).

5. A method according to claim 4, wherein the electrical resistance signal is produced based on the elements (14, 17) working as two resistors in parallel, whereby one of the said elements (14, 17) is overlaid on the other and said first connection means comprises a further connection common to both of said elements (14, 17).

6. A method according to any of the preceding claims, wherein the gas sensor is combined with at least one further sensor so as to form a gas sensor array, the at least one further sensor having a characteristic response to at least one said target gas and/or at least one further gas or vapour different from that of said first sensor.

## Patentansprüche

1. Verfahren zum Detektieren von mindestens einem Zielgas unter Verwendung eines Gassensors, der ein Halbleiter-Abfühlelement (14) aufweist, dessen elektrischer Widerstand sich als Antwort auf eine Veränderung der Konzentration des mindestens einen Zielgases in einem größeren Ausmaß als auf andere Gase oder Dämpfe verändert, wodurch das Abfühlelement (14) zugunsten des Zielgases selektiv ist, um Letzteres zu detektieren, wobei das Abfühlelement einen porösen WO₃-Film aufweist, dessen Dicke im Bereich von 10 bis 200 Mikrometern enthalten ist, wobei der Gassensor ferner ein Heizelement (17) zum Erwärmen des porösen WO₃-Films aufweist, wobei das Verfahren Folgendes umfasst:
das Exponieren des Halbleiter-Abfühlelements (14) einer Atmosphäre;
das Erwärmen des Halbleiter-Abfühlelements (14) auf eine Betriebstemperatur; und
das Erzeugen eines elektrischen Widerstandssignals, das die Menge an Zielgas oder -gasen angibt, die gegenwärtig ist;
und **dadurch gekennzeichnet ist, dass** das Zielgas Chlor ist.

2. Verfahren nach Anspruch 1, wobei die Dicke des WO₃-Films 100 Mikrometer beträgt.

3. Verfahren nach Anspruch 1 oder 2, wobei der poröse WO₃-Film, wenn er erwärmt ist, als Antwort auf die Gegenwart von 0,5 Teilchen pro Million Chlor in Luft einen wesentlich höheren Widerstand zeigt als als Antwort auf SO₂ oder CO.

4. Verfahren nach Anspruch 1, wobei das elektrische Widerstandssignal unter Verwendung von elektrischen Verbindungsmitteln erzeugt wird, die auf verschiedene Weise mit dem Abfühlelement und dem Heizelement verbunden sind, wobei die Verbindungsmittel erste Verbindungsmittel (10, 15), die mit dem Abfühlelement verbunden sind, und eine gemeinsame elektrische Verbindung (20), die mit beiden Elementen (14, 17) verbunden ist, aufweisen.

5. Verfahren nach Anspruch 4, wobei das elektrische Widerstandssignal auf der Basis der Elemente (14, 17), die als zwei parallele Widerstände arbeiten, erzeugt wird, wobei eines der Elemente (14, 17) über das andere gelegt ist und das erste Verbindungsmittel eine weitere Verbindung aufweist, die den beiden Elementen (14, 17) gemeinsam ist.

6. Verfahren nach einem der vorangegangenen Ansprüche, wobei der Gassensor mit mindestens einem weiteren Sensor kombiniert ist, um eine Gassensoranordnung zu bilden, wobei der mindestens eine weitere Sensor eine charakteristische Antwort auf mindestens ein Zielgas und/oder mindestens ein weiteres Gas oder Dampf aufweist, die anders ist als jene des ersten Sensors.

## Revendications

1. Procédé de détection d'un ou de plusieurs gaz cibles par recours à un détecteur de gaz qui comprend un composant semi-conducteur de détection (14) dont la résistance électrique change davantage en réponse à un changement de la concentration du ou des gaz cibles qu'en réponse à d'autres gaz ou vapeurs, le composant de détection (14) étant ainsi sélectif vis-à-vis du gaz cible et permettant de le détecter, le composant de détection comprenant un film poreux en WO₃ dont l'épaisseur est comprise dans la plage de 10 à 200 micromètres inclusifs et le détecteur de gaz comprenant de plus un composant de chauffage (17) qui chauffe le film poreux en WO₃, le procédé comprenant les étapes qui consistent à :
exposer le composant semi-conducteur de détection (14) à une atmosphère,
chauffer le composant semi-conducteur de détection (14) à une température de fonctionnement et
produire un signal de résistance électrique représentant la quantité présente du gaz cible ou des gaz cibles et
**caractérisé en ce que**
le gaz cible est le chlore.

2. Procédé selon la revendication 1, dans lequel ladite épaisseur du film en WO₃ est de 100 micromètres.

3. Procédé selon la revendication 1 ou la revendication 2, dans lequel le film poreux en WO₃, lorsque chauffé, affiche en réponse à la présence de 0,5 part par million de chlore dans l'air une résistance essentiellement supérieure à celle affichée en réponse au SO₂ ou au CO.

4. Procédé selon la revendication 1, dans lequel le signal de résistance électrique est produit en utilisant des moyens de raccordement électrique reliés différemment au composant détecteur et au composant de chauffage, lesdits moyens de raccordement comprenant des premiers moyens de raccordement (10, 15) raccordés au composant de détection et un raccordement électrique commun (20) relié à chacun desdits composants (14, 17).

5. Procédé selon la revendication 4, dans lequel le signal de résistance électrique est produit sur base des composants (14, 17) qui fonctionnent comme deux résistances en parallèle, l'un desdits composants (14, 17) recouvrant l'autre et lesdits premiers moyens de raccordement comprenant un raccordement supplémentaire commun à chacun desdits composants (14, 17).

6. Procédé selon l'une quelconque des revendications précédentes, dans lequel le détecteur de gaz est combiné avec au moins un détecteur supplémentaire pour former une batterie de détecteurs de gaz, le ou les détecteurs supplémentaires présentant une réponse caractéristique audit ou auxdits gaz cibles et/ou à au moins un gaz ou une vapeur supplémentaire différente de celle du premier détecteur.
